# EUROPÄISCHE PATENTSCHRIFT

(11) **EP 0 678 462 B1**
(45) Veröffentlichungstag und Bekanntmachung des Hinweises auf die Patenterteilung: **11.03.1998**
(21) Anmeldenummer: 95250085.8
(22) Anmeldetag: 05.04.1995
(51) Int. Cl.: B65G 1/04

(54) **Hochregal**
High-rise storage rack
Rayonnage d'emmagasinage surélevé

(30) Priorität: 19.04.1994 DE 4416102
(43) Veröffentlichungstag der Anmeldung: 25.10.1995
(73) Patentinhaber: Bellheimer Metallwerk GmbH, D-76752 Bellheim (DE)
(72) Erfinder: Bouché, Norbert, Dipl.-Ing., D-76773 Kuhardt (DE)
(74) Vertreter: Böning, Manfred, Dr.-Ing.

(56) Entgegenhaltungen:
- DE-A- 4 233 688
- FR-A- 520 088
- US-A- 3 233 711
- US-A- 4 909 697

## Beschreibung

Die Erfindung betrifft ein Hochregal mit zwei, übereinander angeordnete Fächer aufweisenden Regalsäulen, von denen mindestens eine mit einer Beschickungs- bzw. Entnahmeöffnung versehen ist und zwischen denen ein mit ihnen eine Einheit bildender Vertikalförderer angeordnet ist, der eine Horizontalfördereinrichtung aufweist, mit deren Hilfe jeweils ein Tablar aus dem Bereich der Beschickungs- bzw. Entnahmeöffnung in ein vom Vertikalförderer angesteuertes Fach überführbar oder aber aus einem Fach entnehmbar und nach Rückführung in den Bereich der Beschickungs- bzw. Entnahmeöffnung durch den Vertikalförderer von dessen Plattform aus in den Bereich der Beschickungs- bzw. Entnahmeöffnung förderbar ist, wobei das Tablar im Bereich der Beschickungs- bzw. Entnahmeöffnung durch antreibbare Rollen abgestützt ist.

Ein Hochregal der vorstehenden Art ist aus der DE 42 33 688 A1 bekannt. Will man bei dem bekannten Hochregal mengenmäßige Veränderungen des sich auf einem Tablar befindlichen Ladegutes vornehmen, so wird das Tablar zum Zwecke der Einlagerung oder Entnahme von Gegenständen vorübergehend in den Bereich der Beschickungs- bzw. Entnahmeöffnung überführt. Da die Vorderkante des eine Plattform für das jeweilige Tablar bildenden Bodens der Beschickungs- bzw. Entnahmeöffnung mit der Vorderwand des Hochregals fluchtet, müssen die zur Ein- bzw. Auslagerung von Gegenständen erforderlichen Handhabungen im Inneren der nach Art eines horizontalen Schachtes ausgebildeten Beschickungs- bzw. Entnahmeöffnung durchgeführt werden. Es ist dies ein Umstand, der dann Probleme bereitet, wenn die eingelagerten Gegenstände schwer sind und sich bei ihrer Handhabung der Einsatz von Hilfsmitteln, wie Kleinhebezeugen, als wünschenswert erweist. In der Praxis ordnet man in derartigen Fällen vor der Beschickungs- bzw. Entnahmeöffnung einen feststehenden Tisch an, der wie der Boden der Beschickungs- bzw. Entnahmeöffnung Rollenbahnen aufweist und auf den vorübergehend jeweils ein Tablar überführbar ist. Ein derartiger Tisch ist andererseits immer dann, wenn die Handhabung des Lagergutes problemlos ohne Hilfsmittel erfolgen kann, nicht nur überflüssig, sondern sogar störend.

Statt eines stationären Tisches gelangt bei einem aus der US-PS 13 17 776 bekannten Regal mit über- und nebeneinander angeordneten Fächern ein mit Hilfe eines Kranes in einen Teil der Fächer des Regales einhängbarer Tisch zum Einsatz, mit dessen Hilfe mit schweren Lasten gefüllte Behälter vom Regal zu einem anderen Standort und zurück beförderbar sind, der Tisch hat in diesem Fall primär die Funktion eines Transportmittels. Bekannt ist schließlich aus der US-PS 49 09 697 die Verwendung von Hubtischen, deren mit Rollen ausgestattete Plattform zwischen einer Horizontallage und einer Schräglage hin- und herbewegbar ist, wobei die Schräglage des Tisches das Be- und Entladen von Behältern erleichtern soll, die über Zwischentische in Fächer eines Umlaufregales überführbar bzw. aus diesen Fächern entnehmbar sind.

Der Erfindung liegt die Aufgabe zugrunde, ein Hochregal der in Betracht gezogenen Art derart auszugestalten, daß seine Bedienung in einer der Schwere der einzulagernden Gegenstände gerecht werdenden Weise jeweils optimal erfolgen kann. Diese Aufgabe wird erfindungsgemäß dadurch gelöst, daß vor der Beschickungs- bzw. Entnahmeöffnung ein Tisch angeordnet ist, der aus einer horizontalen Gebrauchsstellung, in der seine Stützfläche mit der Stützfläche der Beschickungs- bzw. Entnahmeöffnung fluchtet, in eine vertikale Nichtgebrauchsstellung klappbar ist, in der er den Zugang zur Beschickungs- bzw. Entnahmeöffnung freigibt, und daß der Antrieb der Rollen in der abgeklappten Tischstellung unterbrochen, in der hochgeklappten Tischstellung hingegen einschaltbar ist.

Das erfindungsgemäße Hochregal bietet den Vorteil, daß es schnell und bequem an unterschiedliche Ladegutgegebenheiten anpaßbar ist und daß es darüber hinaus ein hohes Maß an Bedienungssicherheit bietet, weil der Tisch nicht nur als Ablage, sondern zusätzlich als Betätigungsorgan für einen Schalter zur Unterbrechnung des Speisekreises zum Antrieb der in den Boden der Beschickungs- bzw. Entnahmeöffnung eingelassenen Rollen genutzt wird.

Eine besonders geeignete Ausführungsform der Erfindung wird anhand der beigefügten Zeichnung näher erläutert.
Es zeigen:
Fig. 1 die perspektivische Teilansicht eines Hochregales,
Fig. 2 Teile eines durch den hochgeklappten Tisch des Hochregales geschlossenen Schaltkreises und
Fig. 3 die in Fig. 2 dargestellten Teile bei heruntergeklapptem Tisch.

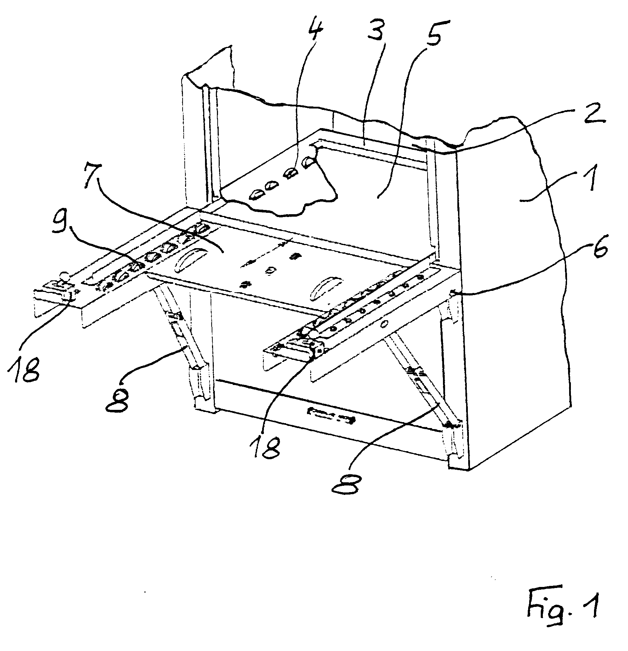

In Figur 1 ist 1 das Gehäuse eines Hochregales, an dessen Vorderseite sich eine Beschickungs- bzw. Entnahmeöffnung 2 befindet, deren eine Plattform bildender Boden 3 mit zwei im Abstand voneinander angeordneten Rollenbahnen mit antreibbaren Rollen 4 versehen ist. Auf den Rollen 4 stützt sich eines der in die Fächer der Regalsäulen des Hochregales einlagerbaren Tablare 5 ab. An der Vorderwand des Regales ist schwenkbar auf Achsen 6 ein Tisch 7 gelagert, der in seiner Arbeitsstellung durch Streben 8 abgestützt wird. Der Tisch ist ebenfalls mit Rollenbahnen versehen, deren Rollen 9 Verlängerungen der von den Rollen 4 gebildeten Rollenbahnen formen.

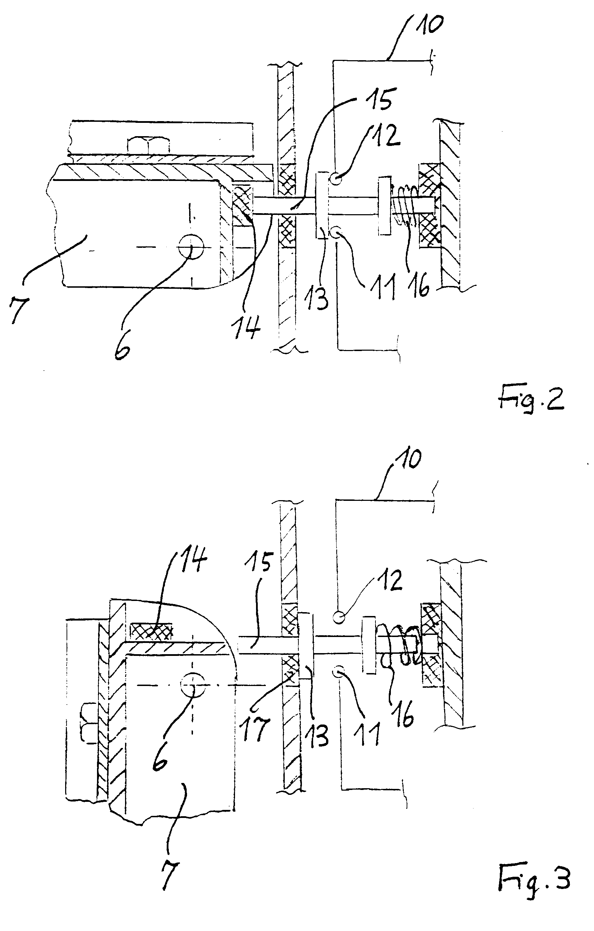

Um das Tablar 5 aus der Beschickungs- bzw. Entnahmeöffnung 2 auf den Tisch 7 zu überführen, werden die Rollen durch ein nicht dargestelltes, herkommliches Antriebssystem in Bewegung versetzt, wobei im Speisekreis 10 des Antriebssystems ein Schalter mit zwei Kontakten 11 und 12 vorgesehen ist, die durch eine vom Tisch 7 betätigbare Kontaktbrücke 13 überbrückbar sind, wie dies in Figur 2 dargestellt ist. Der Tisch 7 ist zu diesem Zweck mit einem Druckstück 14 aus Isoliermaterial ausgestattet, das im hochgeklappten Zustand des Tisches 7 einen Stößel 15 gegen die Wirkung einer Feder 16 verlagert, um die Kontaktbrücke 13 mit den Kontakten 11 und 12 in Eingriff zu bringen, während die Feder 16 die Kontaktbrücke 13 im heruntergeklappten Zustand des Tisches 7 unter Unterbrechung des Speisekreises 10 gegen eine Stützplatte 17 aus Isoliermaterial drückt (vgl. Fig. 3).

An dem der Beschickungs- bzw. Entnahmeöffnung 2 abgewandten Ende des Tisches 7 ist dieser mit entriegelbaren Anschlägen 18 für das jeweils auf ihn überführte Tablar 5 ausgestattet.

## Patentansprüche

1. Hochregal mit zwei, übereinander angeordnete Fächer aufweisenden Regalsäulen, von denen mindestens eine mit einer Beschickungs- bzw. Entnahmeöffnung versehen ist und zwischen denen ein mit ihnen eine Einheit bildender Vertikalförderer angeordnet ist, der eine Horizontalfördereinrichtung aufweist, mit deren Hilfe jeweils ein Tablar aus dem Bereich der Beschickungs- bzw. Entnahmeöffnung in ein vom Vertikalförderer angesteuertes Fach überführbar oder aber aus einem Fach entnehmbar und nach Rückführung in den Bereich der Beschickungs- bzw. Entnahmeöffnung durch den Vertikalförderer von dessen Plattform aus in den Bereich der Beschickungs- bzw. Entnahmeöffnung förderbar ist, wobei das Tablar im Bereich der Beschickungs- bzw. Entnahmeöffnung durch antreibbare Rollen abgestützt ist, **dadurch gekennzeichnet**, daß vor der Beschickungs- bzw. Entnahmeöffnung (2) ein Tisch (7) angeordnet ist, der aus einer horizontalen Gebrauchsstellung, in der seine Stützfläche mit der Stützfläche der Beschickungs- bzw. Entnahmeöffnung fluchtet, in eine vertikale Nichtgebrauchsstellung klappbar ist, in der er den Zugang zur Beschickungs- bzw. Entnahmeöffnung freigibt, und daß der Antrieb der Rollen (4) in der abgeklappten Tischstellung unterbrochen, in der hochgeklappten Tischstellung hingegen einschaltbar ist.

2. Hochregal nach Anspruch 1, **dadurch gekennzeichnet**, daß der Tisch (7) mit entriegelbaren Anschlägen (18) für das Tablar (5) versehen ist.

## Claims

1. High-rise shelving having two shelving columns exhibiting compartments disposed one above the other, of which at least one shelving column is provided with a feed or removal opening and between which shelving columns there is disposed a vertical conveyor which forms a unit with them and exhibits a horizontal conveying mechanism by means of which a shelf-rack can respectively be transferred from the region of the feed or removal opening into a compartment selected by the vertical conveyor or, indeed, can be removed from a compartment and, following return guidance into the region of the feed or removal opening, can be conveyed by the vertical conveyor, from its platform, into the region of the feed or removal opening, the shelf-rack being supported, in the region of the feed or unloading opening, by drivable rollers, characterized in that in the front of the feed or removal opening (2) a table (7) is attached to the shelving which table (7) can be removed from a horizontal operational position in which its supporting surface is in alignment with the supporting surface of the feed and removal opening, into a vertical non-operational position in which it opens free access to the feed and removal opening, and that the drive of the rollers (4) is interrupted in the folded-down position of the table but can be switched on in the folded-up position of the table.

2. The high-rise shelving as claimed in claim 1, characterized in that the table (7) is equipped with releasable stops (18) for the shelf-rack (5).

## Revendications

1. Rayonnage surélevé comprenant deux colonnes de rayonnage présentant deux compartiments disposés l'un au-dessus de l'autre dont au moins un est muni d'une ouverture de chargement ou de déchargement, et entre lesquelles est agencé un convoyeur vertical formant une unité avec les colonnes, le convoyeur présentant un dispositif de convoyage horizontal à l'aide duquel un plateau peut respectivement être transféré de la zone de l'ouverture de chargement ou de déchargement vers un compartiment vers lequel se dirige le convoyeur vertical ou peut être repris d'un compartiment et, après un retransfert dans la zone de l'ouverture de chargement ou de déchargement, peut être transféré par le convoyeur vertical depuis sa plate-forme dans la zone de l'ouverture de chargement ou de déchargement, le plateau, dans la zone de l'ouverture de chargement ou de déchargement, étant en appui sur des rouleaux pouvant être entraînés, caractérisé en ce que devant l'ouverture (2) de chargement ou de déchargement est agencée une table (7) qui peut être rabattue depuis une position d'utilisation horizontale dans laquelle sa surface d'appui est alignée avec la surface d'appui de l'ouverture de chargement ou de déchargement vers une position verticale de non-utilisation dans laquelle elle donne l'accès à l'ouverture de chargement ou de déchargement, et en ce que l'entraînement des rouleaux (7) est interrompu dans la position rabattue de la table et est enclenché dans la position relevée de la table.

2. Rayonnage surélevé selon la revendication 1, caractérisé en ce que la table (7) est munie de butées (18) déverrouillables pour le plateau (5).
